Europäisches Patentamt

European Patent Office

Office européen des brevets

(11) Veröffentlichungsnummer: **0 303 979**

**A2**

# (12) EUROPÄISCHE PATENTANMELDUNG

(21) Anmeldenummer: **88113119.7**

(51) Int. Cl.⁴: **G01L 19/00**

(22) Anmeldetag: **12.08.88**

(30) Priorität: **17.08.87 DE 3727296**

(43) Veröffentlichungstag der Anmeldung:
**22.02.89 Patentblatt 89/08**

(84) Benannte Vertragsstaaten:
**AT CH DE FR GB LI NL**

(71) Anmelder: **Pfeifer, Heidemarie**
**Friedhofstrasse 35**
**D-8756 Kahl(DE)**

(72) Erfinder: **Pfeifer, Kurt**
**Friedhofstr. 35**
**D - 8756 Kahl(DE)**

(74) Vertreter: **Tergau, Enno et al**
**Tergau & Pohl Patentanwälte Hefnersplatz 3**
**Postfach 9347**
**D-8500 Nürnberg 11(DE)**

(54) Vorrichtung zum Messen chemischer und/oder physikalischer Grössen an Flüssigkeiten oder Gasen.

(57) Es wird eine Vorrichtung zum Messen chemischer und/oder physikalischer Größen an Flüssigkeiten oder Gasen in Rohrleitungen bechrieben, bei der wenigstens ein Sensor in einem vom Rohr abzweigenden Stutzen angeordnet ist. Der Sensor (3) befindet sich im Bereich einer Tangentialebene (5) zum Rohrquerschnitt und ist dort unter Vermeidung von Spalten dichtend befestigt. Der Sensor (3) ruht vorzugsweise im Bereich der Tangentialebene (5) auf einem Kragen (9), dessen zum Rohrinnern gerichtete Kante (10) abgerundet oder abgeschrägt ist. Dadurch werden Toträume vermieden und Ecken, in denen sich Ablagerungen oder Mikroorganismen ansammeln könnten, unterdrückt.

Fig. 1

EP 0 303 979 A2

# Vorrichtung zum Messen chemischer und/oder physikalischer Größen an Flüssigkeiten oder Gasen

Die Erfindung betrifft eine Vorrichtung zum Messen chemischer und/oder physikalischer Größen an Flüssigkeiten oder Gasen in Rohrleitungen, bei der ein Sensor in einem vom Rohr abzweigenden Stutzen angeordnet ist. Derartige Vorrichtungen können mechanische Sensoren, beispielsweise Druckmesser, Druckmittler oder Ausdehnungsgefäße enthalten. In zahlreichen Fällen werden auch elektrische oder elektronische Sensoren eingesetzt, die zur Druckbestimmung, zur Messung der Leitfähigkeit, des pH-Wertes, des Redox-Potentiales oder der Durchflußmenge dienen. Auch optische Sensoren werden eingesetzt, um beispielsweise kolorimetrische oder nephelometrische Bestimmungen durchzuführen. Bei allen diesen Vorrichtungen ist es bekannt, die Sensoren entweder unmittelbar in der Rohrleitung, welche die zu messende Flüssigkeit oder das zu messende Gas führt, zu montieren oder aber in einem Stutzen, der seitlich an die Rohrleitung angesetzt ist. Die vom Sensor erfaßten Größen werden in aller Regel in elektrische Signale umgeformt und sodann, gegebenenfalls nach Verstärkung oder sonstiger Weiterverarbeitung durch geeignete Instrumente registriert oder angezeigt.

Bei den vorbekannten Vorrichtungen dieser Art werden die Sensoren oder deren Halterungen in aller Regel nach Gesichtspunkten montiert, die sich nach dem Platzbedarf oder der leichten Zugänglichkei des Sensors bzw. deren Folgeapparate richten. Dies führt jedoch dazu, daß im Umfeld der Sensoren Toträume entstehen, die in vielen Fällen unerwünscht, teilweise sogar nicht tolerrierbar sind.

In den erwähnten Toträumen werden sich nach einiger Zeit Schwebstoffe und andere Partikel absetzen, welche die Funktion beeinträchtigen oder gar unterbinden können. Insbesondere in der pharmazeutischen Industrie oder in der Lebensmittelindustrie führen solche Toträume zur Ansammlung von Mikro-Organismen, welche sich dort hartnäckig halten und nur durch eine generelle Desinfektion der Gesamtanlage zu beseitigen sind.

Der Erfindung liegt die Aufgabe zugrunde, die vorbekannten Vorrichtungen zum Messen chemischer und/oder physikalischer Größen an Flüssigkeiten oder Gasen in Rohrleitungen dahingehend zu verbessern, daß sie gegen die Ansammlung von Verunreinigungen, Mikro-Organismen u.dgl. weitgehend unempfindlich sind und deshalb in der pharmazeutischen Industrie sowie in der Lebensmittelindustrie bedenkenlos eingesetzt werden können. Zur Lösung dieser Aufgabe wird vorgeschlagen, daß der Sensor im Bereich einer Tangentialebene zum Rohrquerschnitt angeordnet und dort unter Vermeidung von Spalten dichtend befestigt ist. Für solche Sensoren, die in den Innenraum des Rohres hineinragen müssen, wird vorgeschlagen, daß im Bereich der Tangentialebene des Rohrquerschnittes eine Platte angeordnet und dort unter Vermeidung von Spalten dichtend befestigt ist, welche als Grundplatte für die Montage der Sensoren dient. Wesentlich für die vorliegende Erfindung ist somit die Tatsache, daß der Sensor mit seiner zum Rohrinnern gerichteten Stirnfläche im Bereich einer Tangentialebene zum Rohrquerschnitt angeordnet und dort unter Vermeidung von Spalten dichtend befestigt ist. Die Anordnung des Sensors oder genauer der Stirnfläche des Sensors im Bereich einer Tangentialebene bringt es mit sich, daß an den gefährdeten Stellen die erwähnten Toträume vermieden werden, welche bevorzugt Nester für Mikroorganismen, aber auch zur Ansammlung von Schwebestoffen u.dgl. bilden. Der Ausdruck "im Bereich einer Tangentialebene" soll andeuten, daß die Stirnfläche des Sensors nun nicht unbedingt exakt in der Tantentialebene zum Rohrquerschnitt liegen muß, sondern daß gewisse kleine Abweichungen davon tolierierbar sind. Solche kleinen Abweichungen können sich ergeben, weil zur praktischen Montage des Sensors Auflagekragen o.dgl. erforderlich sind, die im Hinblick auf die mechanische Stabilität in aller Regel eine Materialstärke von ca. 1 mm benötigen. Dadurch entsteht zwangsläufig eine Anordnung, bei der die Stirnfläche des Sensors geringfügig gegenüber der Tangentialebene zurückversetzt ist. Praktische Erfahrungen haben gezeigt, daß dies jedoch nicht störend ist, da sich durch die Strömung des zu messenden Mediums in den so entsptehenden Ecken Wirbel ausbilden, welche die Ecken von Ablagerungen freihalten oder wieder freiwaschen, so daß hier nicht von der Bildung von Toträumen gesprochen werden kann. In einer besonderen Ausführungsform der Erfindung wird vorgeschlagen, daß der Sensor oder die Platte im Bereich der Tangentialebene auf einem Kragen ruht, dessen zum Rohrinnern gerichtete Kante abgeschrägt oder abgerundet ist. Der erwähnte Bereich wird dadurch noch mehr dem Strömungsverlauf angepaßt, so daß Ablagerungen vermieden werden.

Wesentlich für die Ausführung der Erfindung ist auch die Vermeidung von sonstigen Spalten im Bereich des Sensors. Hierzu ist es insbesondere wichtig, daß dort wo der Sensor auf seinem Lager aufliegt, keine Möglichkeit zum Eindringen von Ablagerungen, Mikroorganismen o.dgl. besteht. Am vorteilhaftesten ist es, wenn die Lagerflächen des Kragens einerseits und des Sensors oder der Platte andererseits plan bearbeitet und ohne Zwischenschaltung einer weiteren Dichtung unmittelbar aufeinandergelegt sind. Die Dichtflächen können zu diesem Zweck geläppt, gehohnt oder poliert sein; wesentlich ist, daß sie völlig spaltfrei aufeinanderpassen, so daß keinerlei Flüssigkeit oder Gas eindringen kann. Andererseits ist es auch möglich, Dichtungen zwischenzuschalten, was man insbesondere dort tun wird, wo eine plane Bearbeitung der Teile auf Schwierigkeiten stößt. Für diesen Fall wird vorgeschlagen, daß als Dichtmaterial nicht etwa O-Ringe oder ähnliche im Querschnitt runde Dichtungen sondern ausschließlich Flachdichtungen eingefügt werden.

Die vorgeschlagene Anordnung eignet sich besonders zum Einsatz in jenen Bereichen, in denen es vor allem auf hygienisch einwandfreie Verhältnisse ankommt. Hierzu zählen die pharmazeutische Industrie, sämtliche Bereiche der Lebensmittelindustrie, insbesondere die Brauereitechnik und die Milchwirtschaft, aber auch große Gebiete der Chemie, insbesondere der organischen Chemie. Die Anwendung der Erfindung ist aber nicht auf diese Bereiche beschränkt, sondern läßt sich auch im Bereich der anorganischen Chemie mit Vorteil einsetzen, da hier häufig trübstoffhaltige Flüssigkeiten oder staubhaltige Gase verarbeitet werden, die ebenfalls zu Störungen bei der herkömmlichen Art der Sensormontage führen. Ein weiterer Vorteil resultiert daraus, daß durch den unmittelbaren Kontakt des Sensors mit dem zu messenden Medium alle Änderung der zu messenden Größen praktisch trägheitslos erfaßt und angezeigt werden. Darüber hinaus ist das von Zeit zu grundsätzlich vorzunehmende Reinigen und Sterilisieren sehr einfach und kann durch Beaufschlagen mit Dampf erfolgen. Bei den bekannten Meßgeräten ist es wesentlich schwieriger und nimmt entsprechend mehr Zeit in Anspruch, die Toträume keimfrei oder ablagerungsfrei zu halten.

Grundsätzlich steht es im Rahmen der Erfindung frei, welche Art von Sensoren eingesetzt werden. So kann die Erfassung von Druckänderungen über Dehnungsmeßstreifen oder über Piezokristalle erfolgen. Besonders bevorzugt werden jedoch kapazitätsveränderliche Sensoren, deren Kapazität bei Variation des Druckes verändert und dann in bekannter Weise elektronisch erfaßt wird. Andere Sensoren als die genannten können jedoch mit den gleichen Vorteilen in der beschriebenen Weise montiert und angeordnet werden.

Der Sensor steht im eingebauten Zustand über einen Teil seiner Oberfläche in unmittelbarem Kontakt mit der im Rohr strömenden Flüssigkeit bzw. dem Gas. Die seitliche Abdichtung soll vorzugsweise - wie gesagt - über eine Flachdichtung oder über plan bearbeitete Flächen erfolgen, um auch in diesen Bereichen keine Toträume entstehen zu lassen. Zudem ist es leicht möglich, Flachdichtungen von außen her auszutauschen und durch eine neue zu ersetzen.

Es wird empfohlen, die Kontaktfläche des Sensors kreisförmig zu wählen. Bei anderen geometrischen Formen, z.B. Rechtecken, bilden sich innerhalb des Sensors Spannungen aus, die kaum oder nur sehr schwierig beherrschbar sind und zu ungenauen Messungen Anlaß geben können.

Sensoren der beschriebenen Art werden im allgemeinen über einen Sockel innerhalb des Gehäuses angebracht. Hierzu wird bevorzugt, den Sockel außenseitig mit einem Gewinde zu versehen, auf den ein Gewindering aufgeschraubt ist, der seinerseits außenseitig mit dem dort befindlichen Gewinde in die Innenseite des Gehäuses eingreift. Die beiden konzentrischen Schraubenflächen erlauben ein Eindringen der Fassung bzw. des daran befestigten Sensors in die Meßposition durch Verschrauben des Gewinderinges, so daß die Fassung selbst und demzufolge auch der Sensor schonend in seine Meßposition gebracht werden kann. Während des Eindrehens des Gewinderinges dreht sich der Sockel also nicht mit.

Wählt man die Steigung auf beiden Seiten des Gewinderinges und folglich sowohl die zu der des Sockels relativ zu der des Gehäuses unterschiedlich, so können große Kräfte auch bei Verwendung vergleichsweise kleiner Schlüssel ausgeübt werden Hierdurch wird die Montage und Demontage des Sensors sowie seine Austauschbarkeit und die der Dichtung wesentlich vereinfacht und erleichtert. Des weiteren gestattet die Wahl von Gewinden unterschiedlicher Steigung ein feinfühliges und wohldosiertes Eindrehen.

Die Erfindung wird im folgenden anhand der beigefügten Zeichnung näher erläutert. Es stellen dar:

Fig. 1 einen vereinfachten Längsschnitt durch eine Ausführungsform;

Fig. 2 einen Längsschnitt durch eine andere Ausführungsform mit Sensoren, welche in den Innenraum der Rohrleitung hineinreichen;

Fig. 3 einen vereinfachten Längsschnitt durch eine weitere Ausführungsform mit zwei einander gegen überliegenden Meßanordnungen.

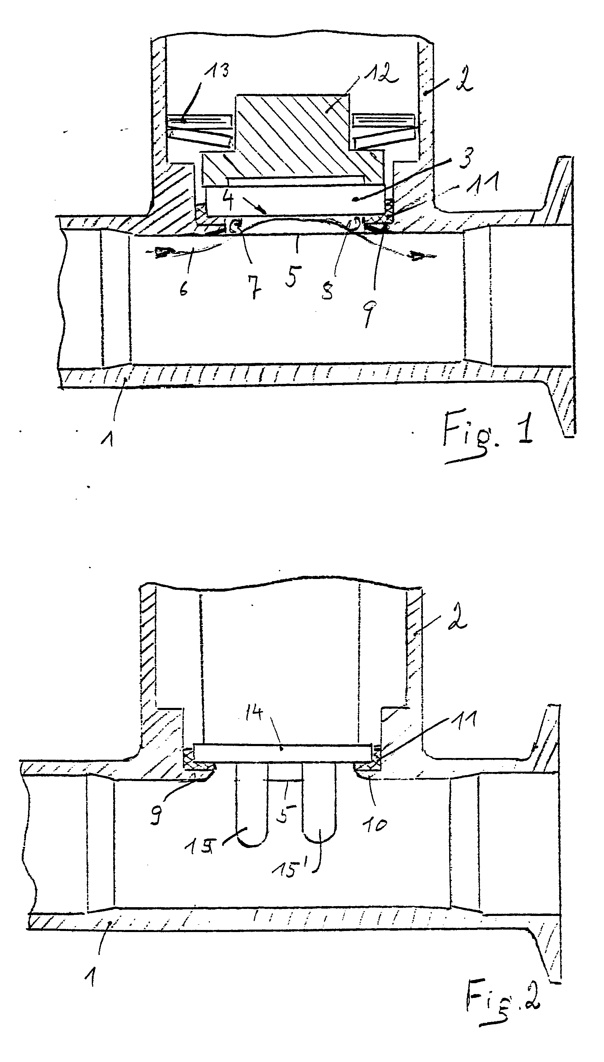

Wie schon vorher bemerkt, wäre es ideal, den Sensor bzw. dessen Stirnfläche (Meßfläche) exakt in derjenigen Ebene anzuordnen, die als Tangentialebene am Rohrquerschnitt anliegt. Dies ist indes in den meisten Fällen aus konstruktiven Gründen nicht möglich. Praktisch ausreichend ist es aber auch, wenn diese Ebene geringfügig, beispielsweise um einen oder wenige Millimeter, gegenüber der Tangentialebene zurückversetzt ist, wie dies in Fig. 1 dargestellt ist. Als Anhaltspunkt darf gelten, daß der "Bereich" der Tangentialebene möglichst wenig zurückversetzt sein soll; als äußerste Grenze tolerierbar ist etwa ein Bereich, der dem Durchmesser des Sensors entspricht. Das in der Rohrleitung (1) strömende Medium wird sich entlang des Strömungspfeiles (6) bewegen, wobei sich die Strömung in großen Bereichen gleichmäßig an die Oberfläche des Sensors anlegt. Die verbleibenden Eckräume (7,8) werden während des gesamten Betriebes kontinuierlich von Strömungswirbeln durchspült, welche für eine stetige Reinigung dieser Bereiche sorgen. Eine Verfälschung des Meßwertes tritt hierdurch nicht ein. Besonders günstig gestaltet sich der Strömungsverlauf, wenn der Sensor oder die Tragplatte auf einem Kragen (9) ruht, dessen zum Rohrinnern gerichtete Kante (10) abgeschrägt oder abgerundet ist.

Im dargestellten Ausführungsbeispiel ist der Sensor (3) unter Zwischenschaltung einer Flachdichtung (11) auf einen kranzförmigen Vorsprung, eben den Kragen (9) aufgelegt. Um den Sensor fest and die Flachdichtung anzupassen, befindet sich auf der Sensorrückseite ein Sockel (12), der im dargestellten Ausführungsbeispiel mit Hilfe von Tellerfedern (13) in Richtung des Sensors gedrückt wird.

Bei der in Fig. 2 dargestellten Ausführungsform befindet sich im Bereich der Tangentialebene (5) eine Platte (14), welche als Grundplatte für die Montage der Sensoren (15,15') dient, die in den Innenraum des Rohres (1) hineinreichen. Derartige Sensoren könnnten beispielsweise pH-Meßelektroden, Leitfähigkeitselektroden o.dgl. sein. Wesentlich ist auch hier, daß die Montageplatte (14) im Bereich der Tangentialebene angeordnet ist und dichtend unter Vermeidung von Spalten dort befestigt ist.

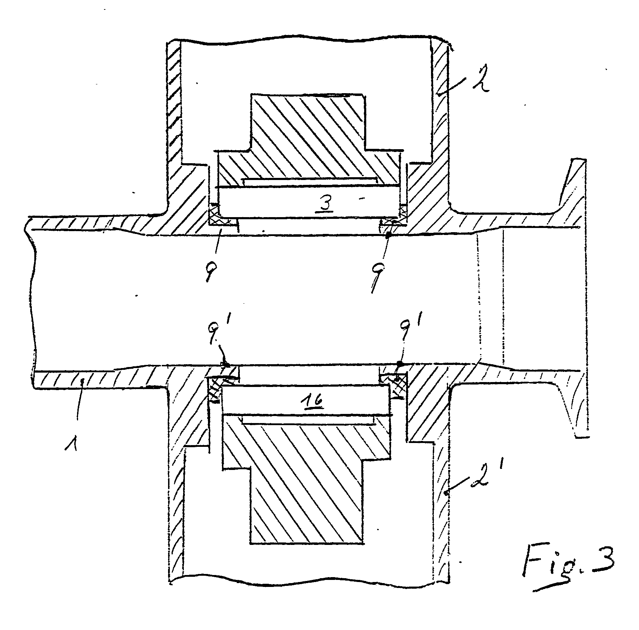

Bei der in Fig. 3 dargestellten Ausführungsform sind an das Rohr (1) seitlich zwei Meßstutzen (2,2') angesetzt. Diese Anordnung kann verwendet werden, wenn zwei physikalische und/oder chemische Meßgrößen gleichzeitig erfaßt werden sollen. Sie kann aber auch benutzt werden, wenn beispielsweise Trübungsmessungen an der durchströmenden Flüssigkeit oder dem durchströmenden Gas durchgeführt werden sollen. In diesem Fall könnte beispielsweise der Sensor (3) eine fotoelektrische Zelle sein, während im gegenüberliegenden Stutzen (2') eine Lichtquelle (16) angeordnet ist. Das Licht dieser Lichtquelle durchdringt die im Rohr (1) strömende Flüssigkeit (oder das Gas) und wird von dessen Trübung mehr oder weniger geschwächt. Der Sensor (3), der in diesem Falle eine lichtelektrische Zelle (Fotozelle) sein kann, zeigt die dort ankommende Reststrahlung an; aus der Extinktion der Strahlung kann anhand einer Eichkurve auf den Trübungsgrad des durchstrahlten Mediums geschlossen werden. Auch in diesem Falle sind Sensor (3) und Lichtquelle (16) dichtend auf den jeweiligen Vorsprüngen (Kragen) (9,9') gelagert, entweder unter Zwischenschaltung jeweils einer Flachdichtung oder aber unmittelbar aufeinander, wobei dann die Dichtflächen plan bearbeitet sein müssen.

Bei einer anderen Ausführungsform kann ein gewünschter Sensor (3) beispielsweise in den Stutzen (2) eingebaut sein, während sich im gegenüberliegenden Stutzen (2') eine Reinigungsvorrichtung für den Sensor (3) befindet. Eine derartige Reinigungsvorrichtung kann beispielsweise ein Ultraschallsender sein, der von Zeit zu Zeit eingeschaltet wird und etwa vorhandene Ablagerungen auf der Sensoroberfläche entfernt.

### Bezugszeichen

1 Rohrleitung
2 Meßstutzen
3 Sensor
4 Meßfläche von (3)
5 Tangentialebene
6 Strömungspfeil
7 Eckraum
8 Eckraum
9 Kragen
10 Kante
11 Flachdichtung
12 Sockel
13 Tellerfedern
14 Platte
15,15' Sensoren
16 Lichtquelle

### Ansprüche

1. Vorrichtung zum Messen chemischer und/oder physikalischer Größen an Flüssigkeiten oder Gasen in Rohrleitungen, bei der wenigstens ein Sensor in einem vom Rohr abzweigenden Stutzen angeordnet ist,
dadurch gekennzeichnet,
daß der Sensor (3) im Bereich einer Tangentialebene (5) zum Rohrquerschnitt angeordnet und dort unter Vermeidung von Spalten dichtend befestigt ist.

2. Vorrichtung nach Anspruch 1,
dadurch gekennzeichnet,
daß im Bereich der Tangentialebene (5) eine Platte (14) angeordnet und dort unter Vermeidung von Spalten dichtend befestigt ist, die als Grundplatte für die Montage von in den Innenraum des Rohres (1) hineinragenden Sensoren (15,15') dient.

3. Vorrichtung nach Anspruch 1 oder 2,
dadurch gekennzeichnet,
daß der Sensor (3) oder der Platte (14) im Bereich der Tangentialebene (5) auf einem Kragen (9) ruht, dessen zum Rohrinnern gerichtete Kante (10) abgeschrägt oder abgerundet ist.

4. Vorrichtung nach einem der Ansprüche 1 bis 3,
dadurch gekennzeichnet,
daß die Lagerfläche des Kragens (9) einerseits und des Sensors (3) oder der Platte (14) andererseits plan bearbeitet und ohne Zwischenschaltung einer weiteren Dichtung unmittelbar aufeinandergelegt sind.

5. Vorrichtung nach einem der Ansprüche 1 bis 3,
dadurch gekennzeichnet,
daß zum spaltlosen Abdichten zwischen die Lagerfläche des Sensors (3) oder der Platte (14) und der Lagerfläche des Kragens (9) eine Flachdichtung (11) eingefügt ist.

6. Vorrichtung nach einem vorausgehenden Ansprüche,
dadurch gekennzeichnet,
daß die Sensoren (3) mechanisch oder hydraulisch wirkende Sensoren sind.

7. Vorrichtung nach einem der Ansprüche 1 bis 5,
dadurch gekennzeichnet,
daß die Sensoren elektrisch oder elektronisch wirkende Sensoren sind.

8. Vorrichtung nach einem der Ansprüche 1 bis 5,
dadurch gekennzeichnet,
daß die Sensoren optisch wirkende Sensoren sind.

9. Vorrichtung nach einem der vorausgehenden Ansprüche,
dadurch gekennzeichnet,
das Gehäuse des Meßfühlers ein Außen- und die Bohrung des Stutzens ein Innen-Gewinde aufweist, zwischen denen ein Gewindering verschraubbar ist, dessen äußeres und inneres Gewinde vorzugsweise unterschiedliche Steigungen aufweisen.

10. Vorrichtung nach einem der vorausgehenden Ansprüche,
dadurch gekennzeichnet,
daß dem Stutzen (2) ein weiterer Stutzen (2') gegenüberliegend angebracht sind.

11. Vorrichtung nach Anspruch 10,
dadurch gekennzeichnet,
daß in den beiden Stutzen (2,2') Meßfühler unterschiedlicher Art untergebracht sind.

12. Vorrichtung nach Anspruch 10,
dadurch gekennzeichnet,
daß im Stutzen (2') ein Sender, beispielsweise eine Lichtquelle und im Stutzen (2) ein Empfänger, beispielsweise eine fotoelektrische Zelle angeordnet ist.

13. Vorrichtung nach Anspruch 10,
dadurch gekennzeichnet,
daß im Stutzen (2) ein Meßfühler und im Stutzen (2') ein System zum Regenerieren (Reinigen, Aktivieren u.ä.) des gegenüberliegenden Sensors untergebracht ist.

Fig. 1

Fig. 2

Fig. 3